# EUROPÄISCHE PATENTSCHRIFT

(11) **EP 3 501 338 B1**
(45) Veröffentlichungstag und Bekanntmachung des Hinweises auf die Patenterteilung: **30.06.2021**
(21) Anmeldenummer: 18212875.1
(22) Anmeldetag: 17.12.2018
(51) Int. Cl.: A47B 9/10, A47C 3/30

(54) **LÄNGENVERSTELLBARE SÄULE UND HERSTELLUNGSVERFAHREN DAFÜR, MÖBELSTÜCK**
COLUMN WITH ADJUSTABLE LENGTH AND METHOD FOR PRODUCING THE SAME, PIECE OF FURNITURE
COLONNE RÉGLABLE EN LONGUEUR ET PROCÉDÉ DE FABRICATION CORRESPONDANT, ÉLÉMENT DE MEUBLE

(30) Priorität: 19.12.2017 DE 102017130473
(43) Veröffentlichungstag der Anmeldung: 26.06.2019
(73) Patentinhaber: Stabilus GmbH, 56070 Koblenz (DE)
(72) Erfinder: Iacob-Clain, Adriana, 505200 Fagaras Brasov (RO); Borcea, Alexandru, 505400 Rasnov Brasov (RO); Brezean, Florin Petru, 505400 Rasnov Brasov (RO); Lukie, Guido, 56218 Mülheim-Kärlich (DE)
(74) Vertreter: Macliing, Trixia

(56) Entgegenhaltungen:
- EP-A2- 2 341 262
- DE-A1- 4 313 766
- DE-A1-102014 108 564
- US-A1- 2004 079 854
- US-B1- 6 474 619

## Beschreibung

Die Erfindung betrifft eine längenverstellbare Säule mit einem Standrohr mit einer Längsachse und einer in dem Standrohr angeordneten Längenverstellvorrichtung mit einem gegenüber dem Standrohr entlang der Längsachse verschieblich gelagerten Abschnitt. Die Erfindung betrifft ferner ein Herstellungsverfahren für eine längenverstellbare Säule und ein Möbelstück mit einer längenverstellbaren Säule.

Aus dem Stand der Technik sind längenverstellbare Säulen, beispielsweise zur Höhenverstellung von Stühlen oder Tischen, bekannt. In der Regel ist bei diesen Säulen neben einer Längenverstellung entlang einer Achse auch eine Rotation um diese Achse möglich. Bei bestimmten Anwendungen soll die Rotation jedoch verhindert werden, beispielsweise bei einer Bestuhlung eines Veranstaltungssaals, die immer auf eine Bühne ausgerichtet sein soll.

So ist beispielsweise aus der Patentanmeldung DE 4313766 A1 eine längenverstellbare Säule für Stühle, Tische oder dergleichen bekannt, bei der ein Gehäuse eines Längenverstellelements in einem Standrohr entlang einer Achse verschieblich geführt ist. Durch ein Zusammenwirken einer Führung des Standrohrs mit einem an dem Gehäuse befestigten Verdrehsicherungselement wird eine Drehung des Gehäuses gegenüber dem Standrohr um die Achse verhindert. Greift jedoch ein hohes Drehmoment an eine solche Säule an, kann es zu einer Verformung des Verdrehsicherungselements und/oder einer Ablösung des Verdrehsicherungselement von dem Gehäuse kommen. In der Folge ist eine Verdrehsicherung nicht mehr gewährleistet und die Längenverstellung kann durch ein Verklemmen des Verdrehsicherungselements mit der Führung blockiert werden.

Aus der Patentanmeldung DE 19628721 A1 ist ebenfalls eine längenverstellbare und verdrehsichere Säule bekannt, bei der ein an einem Längenverstellelement befestigtes Verdrehsicherungsprofil zur Verdrehsicherung in ein Gegenprofil eines Standrohrs eingreift. Dadurch, dass eines der Profilteile in Reihe mit dem Längenverstellelement angeordnet ist, sind die Profilteile bei Benutzung der Säule nicht sichtbar und es steht mehr radialer Bauraum für das Längenverstellelement zur Verfügung. Nachteilig an der Anordnung gemäß DE 19628721 A1 ist, dass bei einem vorgegebenen axialen Bauraum nur relativ kurze Profilteile verwendet werden können, die dementsprechend nur relativ geringe Drehmomenten widerstehen, ohne beschädigt zu werden, was zu den bei DE 4313766 A1 genannten Folgen führen kann.

Aufgabe der Erfindung ist es daher, eine einfach und kostengünstig herzustellende, längenverstellbare und verdrehsichere Säule zu schaffen, die eine höhere Zuverlässigkeit und Langlebigkeit bietet als gattungsgemäße Säulen, ohne zusätzlichen Bauraum zu beanspruchen. Eine weitere Aufgabe der Erfindung ist es, ein einfaches und kostengünstiges Herstellungsverfahren für eine solche Säule zu schaffen.

Der Gegenstand der vorliegenden Erfindung stellt eine Säule bereit, die diese Aufgabe erfindungsgemäß entsprechend den Merkmalen des Anspruches 1 löst. Ebenso wird die Aufgabe durch ein Verfahren entsprechend den Merkmalen des Anspruches 5 und ein Möbelstück gemäß Anspruch 9 gelöst. Vorteilhafte Ausgestaltungen ergeben sich aus den abhängigen Ansprüchen.

Ein Gegenstand der Erfindung ist eine längenverstellbare Säule mit einem Standrohr mit einer Längsachse. Ferner umfasst ist eine in dem Standrohr angeordnete Längenverstellvorrichtung mit einem gegenüber dem Standrohr entlang der Längsachse verschieblich gelagerten Abschnitt. Zumindest in einem Teil eines Hubwegs der Längenverstellvorrichtung kann der Abschnitt um die Längsachse drehbar bezüglich des Standrohres geführt oder gelagert sein. Die längenverstellbare Säule umfasst eine Drehsicherungsvorrichtung zur Sicherung des Abschnitts gegenüber einer Drehung um die Längsachse relativ zu dem Standrohr. Die Erfindung ist besonders vorteilhaft einsetzbar, wenn die Drehsicherungsvorrichtung über den gesamten Hubweg wirkt.

Vorteilhafterweise, weil aus vorgefertigten und ggf. standardisierbaren Rohren ablängbar, ist das Standrohr und/oder der Abschnitt in einem Querschnitt bezüglich der Längsachse rund ausgebildet. Besonders bevorzugt ist das Standrohr zumindest abschnittsweise zylinderförmig, so dass es besonders einfach herzustellen und aufgrund des runden Querschnitts und der damit verbundenen um die Längsachse isotropen Kraftaufnahmefähigkeit mechanisch stabil ist. Wenn Standrohr und Abschnitt zylinderförmig sind, ergibt sich daraus der zusätzliche Vorteil, dass sie nicht, beispielsweise durch eine geringfügige Drehung gegeneinander um die Längsachse, miteinander verklemmen können. Bevorzugt ist die Längenverstellvorrichtung koaxial in dem Standrohr angeordnet, um eine besonders hohe mechanische Stabilität bei gleichzeitiger zuverlässiger und leichtgängiger Führung der Längenverstellvorrichtung im Standrohr entlang der Längsachse sicherzustellen.

Die Längenverstellvorrichtung kann beispielsweise eine pneumatische oder hydropneumatische Kolben-Zylindereinheit, insbesondere eine Gasdruckfeder, umfassen, wobei der Abschnitt insbesondere ein Teil eines Zylinders der Kolben-Zylindereinheit sein kann.

Durch die Drehsicherungsvorrichtung wird vorteilhafterweise sichergestellt, dass sich der Abschnitt nicht gegenüber dem Standrohr um die Längsachse dreht. Wenn das Standrohr beispielsweise ortsfest auf einem Untergrund angeordnet ist, kann durch die Säule ein mit dem Abschnitt starr verbundenes Element, beispielsweise eine Sitzfläche eines Stuhls, beispielsweise entlang einer vertikalen Achse höhenverstellt werden, ohne um diese Achse drehbar zu sein.

Die Drehsicherungsvorrichtung umfasst ein Innenelement, das an einer Außenfläche des Abschnitts befestigt ist, und ein Außenelement, das an einer Innenfläche des Standrohrs befestigt ist. Das Innenelement wirkt vorteilhafterweise gegenüber einer Drehung um die Längsachse formschlüssig mit dem Außenelement zusammen und ist beispielsweise von dem Außenelement entlang der Längsachse verschieblich geführt.

Das Innenelement ist durch eine stoffschlüssige Verbindungsschicht mit dem Abschnitt verbunden. Die Verbindungsschicht, beispielsweise eine Schweißnaht, eine Lötschicht und/oder eine Klebstoffschicht, stellt eine mechanisch besonders stabile Verbindung zwischen dem Innenelement und dem Abschnitt her. Die Verbindung ist insbesondere wesentlich stabiler als eine beispielsweise in DE 43 13 766 A1 beschriebene Verbindung eines Verdrehsicherungsprofils mit einem Gehäuse durch thermisches Aufpressen. Die besonders stabile Verbindung sorgt dafür, dass die Drehsicherungsvorrichtung höheren Drehmomenten standhält, ohne dass sich das Innenelement von dem Abschnitt löst. Somit steigen die Zuverlässigkeit und Langlebigkeit der Säule.

Das Innenelement besteht aus einem Material mit mindestens ebenso hoher Festigkeit wie der Abschnitt. Eine hohe Festigkeit bedeutet, dass das Material einer hohen Spannung oder einem hohen Druck standhält, ohne sich zu verformen oder zu versagen. Ein Material hoher Festigkeit sorgt dafür, dass die Drehsicherungsvorrichtung hohen Drehmomenten standhält, ohne dass das Innenelement verformt wird, was zu einem Verklemmen mit dem Außenelement und/oder einem Verlust der Drehsicherungsfunktion führen könnte. Ferner können Strukturen, beispielsweise Vorsprünge, des Innenelements, die zur Drehsicherung formschlüssig mit dem Außenelement zusammenwirken, bei Verwendung eines Materials hoher Festigkeit kleiner ausgestaltet sein, sodass das Innenelement und somit auch die Säule als Ganzes kompakter aufgebaut sein kann.

Im Stand der Technik (z.B. DE 43 13 766 A1) wird dagegen ein Verdrehsicherungsprofil aus einem weniger festen Material als das Gehäuse, auf das es aufgebracht wird, verwendet, um das Gehäuse beim Aufbringen des Verdrehsicherungsprofils, insbesondere mit einem umformenden Verfahren wie beispielsweise durch thermisches Aufpressen, nicht zu beschädigen. Eine Beschädigung des Gehäuses ist insbesondere dann aus Sicherheitsgründen zu vermeiden, wenn es Teil eines Druckzylinders, beispielsweise von einer Gasdruckfeder, ist. Erst durch die erfindungsgemäße Verbindung des Innenelements mit dem Abschnitt ist es möglich, für das Innenelement ein festeres Material zu verwenden, ohne Gefahr zu laufen, den Abschnitt zu beschädigen.

Für einen möglichst einfachen Aufbau der Säule und eine besonders stabile stoffschlüssige Verbindungsschicht bestehen das Innenelement und der Abschnitt vorzugsweise aus dem gleichen Material. Das Innenelement besteht erfindungsgemäß aus einem Stahl, insbesondere mit einer gehärteten Oberfläche, und der Abschnitt besteht beispielsweise aus einem Stahl, insbesondere mit einer gehärteten Oberfläche. Eine gehärtete Oberfläche kann beispielsweise durch ein Nitrieren des Stahls bereitgestellt sein. Sie kann den Verschleiß, insbesondere des Innenelements bei einer Verschiebung entlang des Außenelements, verringern.

Das Außenelement kann aus einem Kunststoff, insbesondere aus einem selbstschmierenden Kunststoff, beispielsweise aus Polyoxymethylen, bestehen. Aus einem Kunststoff kann das Außenelement, insbesondere auch mit einer erfindungsgemäß durch Nuten strukturierten Innenfläche, schnell und kostengünstig hergestellt werden. Ferner hat ein Außenelement aus Kunststoff in der Regel eine geringere Masse als aus einem Metall- oder Keramikwerkstoff. Außerdem hat ein, insbesondere selbstschmierender, Kunststoff gegenüber einem Innenelement, beispielsweise aus Metall, eine geringe Reibung, sodass das Außenelement und das Innenelement leichtgängig gegeneinander verschoben und somit eine Länge der Säule leichtgängig verstellt werden kann.

Da das Außenelement bezüglich der Längsachse außen von dem Innenelement angeordnet ist, hat es einen größeren Umfang, und formschlüssig gegen eine Verdrehung zusammenwirkende Strukturen können an dem Außenelement mit höherer Materialstärke ausgestaltet sein als an dem Innenelement. Daher kann auch mit einem Material des Außenelements, beispielsweise einem Kunststoff, das weniger fest ist als ein Material des Innenelements, das erfindungsgemäß ein Stahl ist, eine ausreichend hohe Stabilität der Strukturen des Außenelements und somit eine Verdrehsicherung gegen hohe Drehmomente sichergestellt werden.

Das Innenelement und das Außenelement sind zueinander komplementär geformt. Unter "komplementär geformt" wird im Sinne der Erfindung verstanden, dass ein Abstand radial zur Längsachse zwischen dem Innenelement und dem Außenelement in allen radialen Richtungen gleich groß ist. Vorteilhafterweise ist der Abstand möglichst klein. Die komplementäre Form erlaubt eine besonders stabile und präzise Führung des Innenelements durch das Außenelement, insbesondere wenn der Abstand klein ist, also nur geringes mechanisches Spiel vorliegt.

Das Außenelement umfasst einen zylindrischen Außengrundkörper mit einer Anzahl von, beispielsweise ein, zwei, drei, vier oder fünf, Nuten in einer Innenfläche des Außengrundkörpers. Das Innenelement umfasst einen zylindrischen Grundkörper mit einer Anzahl von, beispielsweise ein, zwei, drei, vier oder fünf, in die Nuten eingreifenden Vorsprüngen auf einer Außenfläche des Grundkörpers. Vorteilhafterweise sind die Nuten und/oder Vorsprünge gleichmäßig, also mit gleichem Winkelabstand voneinander, um die Längsachse verteilt, sodass eine gleichmäßige Kraftverteilung gewährleistet ist. Das Außenelement und/oder das Innenelement können insbesondere so wie die Führungsbuchse beziehungsweise das Verdrehsicherungsprofil geformt sein, die von Spalte 2, Zeile 56 bis Spalte 3, Zeile 62 der Druckschrift DE 4313766 A1, die hier durch Bezugnahme aufgenommen ist, beschrieben werden.

Das Außenelement kann einstückig mit dem Standrohr, beispielsweise aus Kunststoff, ausgestaltet sein, um die Anzahl der Bauteile der Säule und somit die Herstellungskosten zu reduzieren.

Ein Übergangsbereich von Vorsprüngen des Innenelements zu einem Innengrundkörper des Innenelements und/oder ein dem Innengrundkörper abgewandtes Ende der Vorsprünge kann abgerundet sein. Die Abrundungen verhindern, dass sich das Innenelement mit dem Außenelement verkantet, und dass es zu Spannungskonzentrationen in dem Übergangsbereich oder an dem Ende der Vorsprünge kommt, die zu Materialversagen führen könnten. Nachteilig an den Abrundungen kann sein, dass dadurch eine effektive Kontaktfläche zwischen dem Innenelement und dem Außenelement zur Aufnahme eines Drehmoments zwischen den Elementen verringert wird. Dadurch könnte das maximale Drehmoment, dem die Drehsicherungsvorrichtung widersteht, verringert werden. Ein solcher Effekt kann jedoch erfindungsgemäß, beispielsweise durch Auswahl eines ausreichend festen Materials für das Innenelement, kompensiert werden.

Eine Innenelementlänge parallel zur Längsachse entspricht in einer vorteilhaften Ausgestaltung mindestens der Summe aus einer Außenelementlänge parallel zur Längsachse und einem Hubweg der Längenverstellvorrichtung. Dadurch wird sichergestellt, dass das Außenelement das Innenelement über den gesamten Hubweg mit der gesamten Außenelementlänge führen kann, sodass sich eine besonders stabile und präzise Führung ergibt.

Ein erfindungsgemäßes Verfahren zur Herstellung einer erfindungsgemäßen längenverstellbaren Säule umfasst zumindest die folgenden Schritte:
a. Bereitstellen einer Längenverstellvorrichtung mit einem, vorzugsweise zylindrischen, Abschnitt und eines Innenelements einer Drehsicherungsvorrichtung mit einem, vorzugsweise zylindrischen, Innengrundkörper, wobei ein Außendurchmesser des Abschnitts kleiner oder gleich einem Innendurchmesser des Innengrundkörpers ist;
b. vorzugsweise koaxiales Anordnen des Abschnitts in dem Innengrundkörper und
c. stoffschlüssiges Verbinden des Innengrundkörpers mit dem Abschnitt.

Dadurch, dass ein Außendurchmesser des Abschnitts, insbesondere bei einer, vorteilhafterweise nicht kontrollierten, Umgebungstemperatur von 10 °C bis 30 °C, vorzugsweise 15 °C bis 25 °C, kleiner oder gleich einem Innendurchmesser des Innengrundkörpers ist, kann der Abschnitt besonders einfach in dem Innengrundkörper angeordnet, beispielsweise darin eingeschoben, werden. Insbesondere ist es nicht notwendig den Abschnitt oder den Innengrundkörper für das Anordnen umzuformen, beispielsweise mechanisch oder durch ein Erhitzen oder Abkühlen. Dadurch entfallen zusätzliche Verfahrensschritte und eine Gefahr von Beschädigungen des Abschnitts oder des Innengrundkörpers wird verringert.

Durch das stoffschlüssige Verbinden, beispielsweise ein Verschweißen, Verlöten und/oder Verkleben, vorzugsweise nach dem Anordnen, kann eine sehr feste Verbindung des Innengrundkörpers mit dem Abschnitt erreicht werden. Insbesondere kann im Gegensatz zu mechanischen Verbindungsmethoden wie Schrauben oder Nieten eine großflächige, gleichmäßige Verbindung erreicht werden, die zu einer gleichmäßigen Spannungsverteilung und somit einer reduzierten mechanischen Punktbelastung des Abschnitts und des Innengrundkörpers führt.

Das Verfahren kann ein Aufbringen, beispielsweise ein Aufstreichen oder Aufsprühen, eines Klebstoffs, bevorzugt eines Metall-Klebstoffs, auf einer Außenfläche des Abschnitts und/oder einer Innenfläche des Innengrundkörpers, insbesondere vor dem Anordnen, umfassen. Durch einen Klebstoff, beispielsweise einen ZweiKomponenten-Klebstoff, kann ein stoffschlüssiges Verbinden erfolgen, ohne ein Korrosionsrisiko, wie beispielsweise bei einer Schweißverbindung, einzugehen.

Das Aufbringen kann auf der gesamten Außenfläche des Abschnitts erfolgen. Dadurch wird ein großflächiges und gleichmäßiges Verkleben mit einer hohen Festigkeit und gleichmäßiger Spannungsverteilung erreicht.

Das Aufbringen kann in einer zum Ausfüllen eines sich beim Anordnen zwischen dem Abschnitt und dem Innengrundkörper bildenden Zwischenraums ausreichenden Menge erfolgen. Vorteilhafterweise können somit durch den Klebstoff geringfügige Abweichungen des Abschnitts und/oder des Innenelements von Ihren Soll-Abmessungen kompensiert werden, sodass diese mit weiteren Toleranzen und somit schneller und/oder kostengünstiger gefertigt sein können. Beispielsweise können geringe Abweichungen des Außendurchmessers des Abschnitts oder des Innendurchmessers des Innengrundkörpers von ihren Soll-Werten kompensiert werden, ohne die Festigkeit der Verbindung von Abschnitt und Innenelement zu beeinträchtigen. Insbesondere können der Abschnitt und/oder das Innenelement mit weiteren Toleranzen gefertigt werden, als wenn sie durch ein Verpressen wie im Stand der Technik (z.B. DE 4313766 A1) verbunden werden sollten.

Das Bereitstellen kann ein Kaltziehen des Abschnitts und/oder des Innengrundkörpers umfassen. Durch Kaltziehen lassen sich der Abschnitt und der Innengrundkörper schnell und kostengünstig, insbesondere ohne thermische Belastung, fertigen.

Das Bereitstellen kann ein Härten einer Oberfläche des Abschnitts und/oder des Innengrundkörpers, beispielsweise durch ein Nitrieren einer Stahloberfläche umfassen. Durch ein Härten einer Oberfläche, insbesondere des Innengrundkörpers, wird dessen Verschleißbeständigkeit und somit die Zuverlässigkeit und Langlebigkeit der Säule erhöht.

Ein erfindungsgemäßes Möbelstück, insbesondere ein Stuhl oder Tisch, umfasst eine erfindungsgemäße Säule, insbesondere als Teil eines Stuhlbeins oder Tischbeins. Dadurch kann vorteilhafterweise eine Höhe des Stuhls oder Tischs durch eine Längenverstellung der Säule angepasst werden, ohne dass sich der Stuhl oder Tisch um die Längsachse des Standrohrs der Säule drehen kann. Unter einem "Stuhl" wird erfindungsgemäß jede Form von Sitzmöbel, also insbesondere ein Stuhl, ein Hocker, ein Sitz oder ein Sessel verstanden. Ein "Tisch" im Sinne der Erfindung kann insbesondere ein Schreibtisch, Konferenztisch, Esstisch, Stehtisch, Labortisch, eine Arbeitsfläche oder eine Werkbank sein.

Weitere Vorteile, Ziele und Eigenschaften vorliegender Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugsziffern gekennzeichnet sein, wobei diese Bauteile nicht in allen Figuren beziffert und erläutert sein müssen.

**Es zeigen:**
Fig. 1 einen schematischen Längsschnitt einer erfindungsgemäßen Säule;
Fig. 2 einen schematischen Querschnitt einer erfindungsgemäßen Säule;
Fig. 3 eine schematische perspektivische Darstellung einer erfindungsgemäßen Säule und
Fig. 4 eine schematische Darstellung eines erfindungsgemäßen Verfahrens.

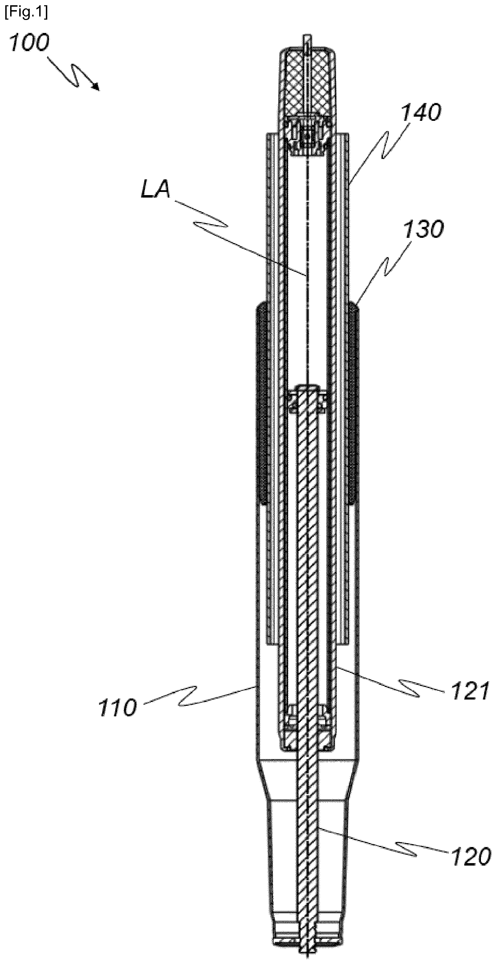

**Figur 1** zeigt einen schematischen Längsschnitt entlang einer Längsachse LA eines Standrohrs 110 einer erfindungsgemäßen Säule 100. Das Standrohr 110 kann beispielsweise dazu ausgelegt sein, mit seinem in der Darstellung unteren Ende mit einem Fuß eines Stuhls starr verbunden zu werden. In dem Standrohr 110 ist eine Längenverstellvorrichtung 120 angeordnet, die beispielsweise eine Kolben-Zylindereinheit umfasst. Die Längenverstellvorrichtung 120 ist beispielsweise mit ihrem in der Darstellung unteren Ende starr mit dem Standrohr 110 verbunden. Das in der Darstellung obere Ende der Längenverstellvorrichtung 120 kann beispielsweise zur starren Verbindung mit einer Sitzfläche eines Stuhls ausgelegt sein. Durch eine Längenverstellung der Längenverstellvorrichtung 120 kann somit beispielsweise ein Abstand der Sitzfläche des Stuhls von seinem Fuß und somit eine Sitzhöhe verstellt werden. Das Standrohr 110 und die Längenverstellvorrichtung 120 sind beispielsweise im Wesentlichen zylinderförmig und koaxial zu der Längsachse LA angeordnet.

Die Längenverstellvorrichtung 120 umfasst einen Abschnitt 121, beispielsweise einen Teil eines Zylindergehäuses einer Kolben-Zylindereinheit, an dessen Außenfläche ein Innenelement 140 einer Drehsicherungsvorrichtung befestigt ist. Das Innenelement 140 ist durch eine stoffschlüssige Verbindungsschicht (nicht dargestellt), beispielsweise eine Klebstoffschicht, mit dem Abschnitt 121 verbunden.

Das Innenelement 140 wirkt gegenüber einer Drehung um die Längsachse LA formschlüssig mit einem Außenelement 130, das an einer Innenfläche des Standrohrs 110 befestigt ist, zusammen und ist von dem Außenelement 130 entlang der Längsachse LA verschieblich geführt. Das Innenelement 140 und das Außenelement 130 bilden somit eine Drehsicherungsvorrichtung 150 zur Sicherung des Abschnitts 121 gegenüber einer Drehung um die Längsachse LA relativ zu dem Standrohr 110.

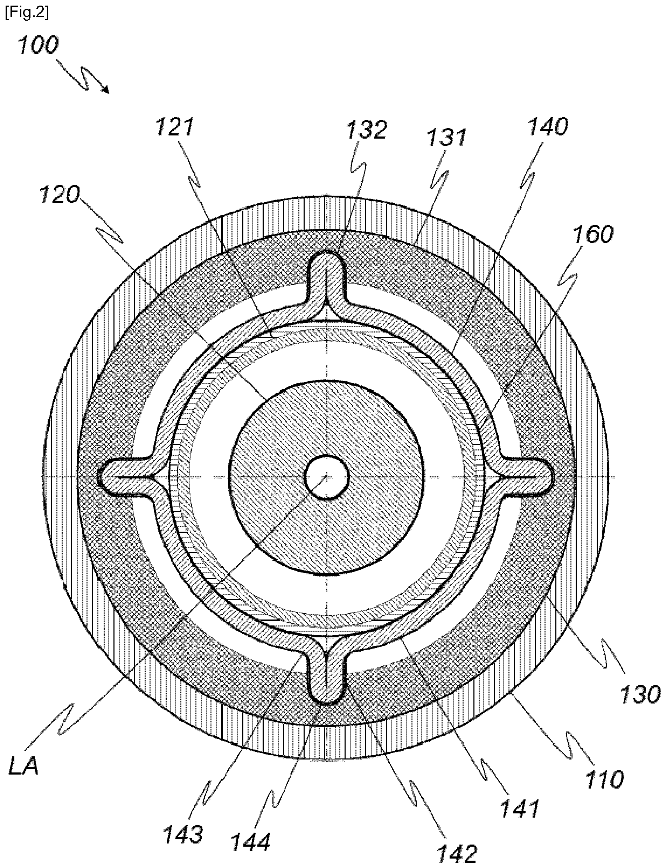

**Figur 2** zeigt einen schematischen Querschnitt orthogonal zur Längsachse LA der in Figur 1 dargestellten Säule 100. In dieser Darstellung ist die stoffschlüssige Verbindungsschicht 160 zwischen dem Innenelement 140 und dem Abschnitt 121 zu erkennen. Weiterhin zeigt diese Darstellung, dass das Außenelement 130 aus einem zylindrischen Außengrundkörper 131 mit einer Anzahl von, im dargestellten Beispiel vier, Nuten 132 an einer Innenseite besteht. Die Nuten sind insbesondere jeweils um 90° voneinander um die Längsachse LA beabstandet. Die Darstellung zeigt außerdem, dass das Innenelement 140 aus einem zylindrischen Innengrundkörper 141 mit einer Anzahl von, im dargestellten Beispiel vier, Vorsprüngen 142 an einer Außenseite besteht. Die Vorsprünge 142 greifen gegenüber einer Drehung um die Längsachse LA formschlüssig in die Nuten 132 ein.

Ein Übergangsbereich 143 der Vorsprünge 142 zu dem Innengrundkörper 141 und ein dem Innengrundkörper 141 abgewandtes Ende 144 der Vorsprünge 142 kann jeweils, insbesondere wie in Figur 2 dargestellt, abgerundet sein.

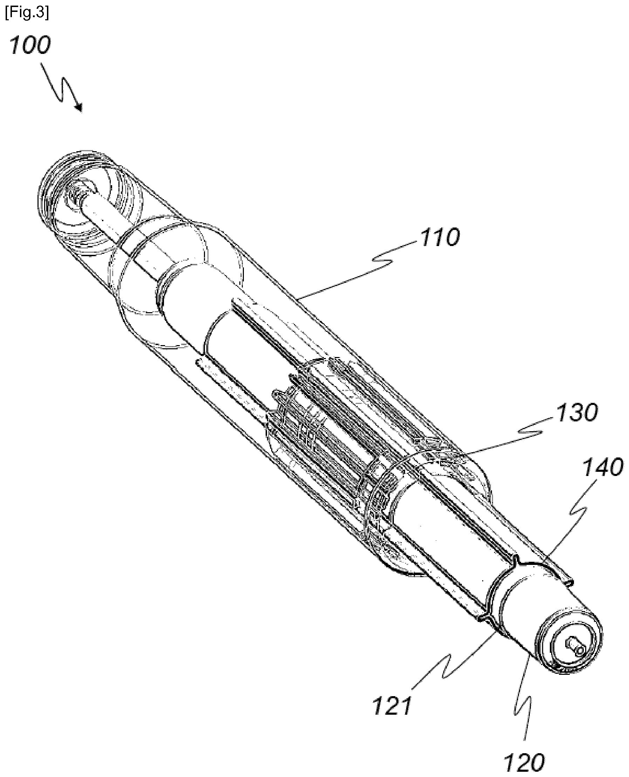

**Figur 3** zeigt eine schematische perspektivische Darstellung der in Figur 1 und Figur 2 dargestellten Säule 100.

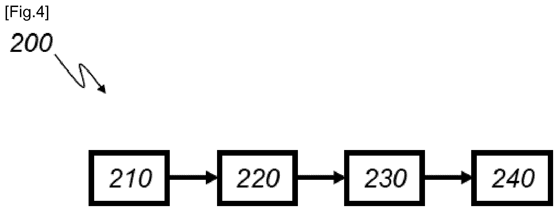

**Figur 4** zeigt eine schematische Darstellung eines erfindungsgemäßen Verfahrens 200. Das dargestellte Verfahren 200 umfasst ein Bereitstellen 210 einer Längenverstellvorrichtung 120 mit einem, insbesondere zylindrischen, Abschnitt 121 und eines, insbesondere zylindrischen, Innenelements 140 einer Drehsicherungsvorrichtung mit einem Innengrundkörper, wobei ein Außendurchmesser des Abschnitts 121 kleiner oder gleich einem Innendurchmesser des Innengrundkörpers 141 ist. Der Abschnitt 121 und der Innengrundkörper 141 werden beispielsweise durch Kaltziehen aus einem Stahl bereitgestellt.

Nach dem Bereitstellen 210 erfolgt beispielsweise ein Aufbringen 220, beispielsweise ein Aufstreichen, eines Metall-Klebstoffs auf einer Außenfläche des Abschnitts 121.

Nach dem Aufbringen 220 erfolgt beispielsweise ein, insbesondere koaxiales, Anordnen 230 des Abschnitts 121 in dem Innengrundkörper 141, beispielsweise, indem der Abschnitt 121 in den Innengrundkörper 141 eingeschoben wird.

Nach dem Anordnen 230 erfolgt beispielsweise ein stoffschlüssiges Verbinden 240 des Innengrundkörpers 141 mit dem Abschnitt 121, beispielsweise durch ein Aushärten eines Klebstoffs.

### BEZUGSZEICHENLISTE

- 100: Säule
- 110: Standrohr
- 120: Längenverstellvorrichtung
- 121: Abschnitt
- 130: Außenelement
- 131: Außengrundkörper
- 132: Nut
- 140: Innenelement
- 141: Innengrundkörper
- 142: Vorsprung
- 143: Übergangsbereich
- 144: Ende
- 160: Verbindungsschicht
- 200: Verfahren
- 210: Bereitstellen
- 220: Aufbringen
- 230: Anordnen
- 240: Verbinden

## Patentansprüche

1. Längenverstellbare Säule (100) mit
a. einem Standrohr (110) mit einer Längsachse (LA) und
b. einer in dem Standrohr (110) angeordneten Längenverstellvorrichtung (120) mit einem gegenüber dem Standrohr (110) entlang der Längsachse (LA) verschieblich gelagerten Abschnitt (121), und
c. einer Drehsicherungsvorrichtung zur Sicherung des Abschnitts (121) gegenüber einer Drehung um die Längsachse (LA) relativ zu dem Standrohr (110),
d. wobei die Drehsicherungsvorrichtung ein Innenelement (140), das an einer Außenfläche des Abschnitts (121) befestigt ist, und ein Außenelement (130), das an einer Innenfläche des Standrohrs (110) befestigt ist, umfasst,
e. wobei das Innenelement (140) gegenüber einer Drehung um die Längsachse (LA) formschlüssig mit dem Außenelement (130) zusammenwirkt und von dem Außenelement (130) entlang der Längsachse (LA) verschieblich geführt ist,
f. wobei das Innenelement (140) und das Außenelement (130) zueinander komplementär geformt sind,
g. wobei das Außenelement (130) einen zylindrischen Außengrundkörper (131) mit einer Anzahl von Nuten (132) in einer Innenfläche (132) des Außengrundkörpers (131) umfasst, und
h. wobei das Innenelement (140) einen zylindrischen Innengrundkörper (141) mit einer Anzahl von in die Nuten (132) eingreifenden Vorsprüngen (142) auf einer Außenfläche des Innengrundkörpers (141) umfasst,,
**dadurch gekennzeichnet, dass**
i. das Innenelement (140) durch eine stoffschlüssige Verbindungsschicht (160) mit dem Abschnitt (121) verbunden ist, und
j. das Innenelement (140) aus einem Stahl und aus einem Material mit mindestens ebenso hoher Festigkeit wie der Abschnitt (121) besteht.

2. Säule (100) nach Anspruch 1,
**dadurch gekennzeichnet, dass**
das Innenelement (140) aus einem Stahl mit einer gehärteten Oberfläche besteht.

3. Säule (100) nach Anspruch 1 oder 2,
**dadurch gekennzeichnet, dass**
das Außenelement (130) aus einem selbstschmierenden Kunststoff, bevorzugt aus Polyoxymethylen, besteht.

4. Säule (100) nach einem der Ansprüche 1 bis 3,
**dadurch gekennzeichnet, dass**
ein Übergangsbereich (143) von Vorsprüngen (142) des Innenelements (140) zu einem Innengrundkörper (141) des Innenelements (140) und/oder ein dem Innengrundkörper (141) abgewandtes Ende (144) der Vorsprünge (142) abgerundet ist.

5. Verfahren (200) zur Herstellung einer längenverstellbaren Säule (100) gemäß einem der Ansprüche 1 bis 4,
umfassend folgende Schritte:
a. Bereitstellen (210) einer Längenverstellvorrichtung (120) mit einem Abschnitt (121) und eines Innenelements (140) einer Drehsicherungsvorrichtung (160) mit einem Innengrundkörper (141), wobei ein Außendurchmesser des Abschnitts (121) kleiner oder gleich einem Innendurchmesser des Innengrundkörpers (141) ist;
b. Anordnen (230) des Abschnitts (121) in dem Innengrundkörper (141) und
c. stoffschlüssiges Verbinden (240) des Innengrundkörpers (141) mit dem Abschnitt (121).

6. Verfahren (200) nach Anspruch 5,
**gekennzeichnet durch**
ein Aufbringen (220) eines Klebstoffs, bevorzugt eines Metall-Klebstoffs, auf einer Außenfläche des Abschnitts (121) und/oder einer Innenfläche des Innengrundkörpers (141).

7. Verfahren (200) nach Anspruch 6,
**dadurch gekennzeichnet, dass**
das Aufbringen (220) auf der gesamten Außenfläche des Abschnitts (121) und/oder in einer zum Ausfüllen eines sich beim Anordnen (230) zwischen dem Abschnitt (121) und dem Innengrundkörper (141) bildenden Zwischenraums ausreichenden Menge erfolgt.

8. Verfahren (200) nach einem der Ansprüche 5 bis 7,
**dadurch gekennzeichnet, dass**
das Bereitstellen (210) ein Kaltziehen des Abschnitts (121) und/oder des Innengrundkörpers (141) und/oder ein Härten einer Oberfläche des Abschnitts (121) und/oder des Innengrundkörpers (141) umfasst.

9. Möbelstück, insbesondere Stuhl oder Tisch, mit einer Säule (100) nach einem der Ansprüche 1 bis 4.

## Claims

1. Column (100) with adjustable length comprising
a. a standpipe (110) with a longitudinal axis (LA) and
b. a length adjustment device (120) which is arranged in the standpipe (110) and has a section (121) which is mounted so as to be displaceable relative to the standpipe (110) along the longitudinal axis (LA) and
c. an anti-rotation device for securing the section (121) against rotation about the longitudinal axis (LA) relative to the standpipe (110),
d. wherein the anti-rotation device comprises an inner element (140) which is attached to an outer surface of the section (121) and an outer element (130) which is attached to an inner surface of the standpipe (110),
e. wherein the inner element (140) cooperates positively with the outer element (130) with respect to a rotation about the longitudinal axis (LA) and is displaceably guided by the outer element (130) along the longitudinal axis (LA),
f. wherein the inner element (140) and the outer element (130) are shaped complementarily to one another,
g. wherein the outer element comprises a cylindrical outer base body (131) with a number of grooves (132) in an inner surface (132) of the outer base body (131) and
h. wherein the inner element (140) comprises a cylindrical base body (141) with a number of projections (142) engaging in the grooves (132) on an outer surface of the base body (141),
**characterized in that**
i. the inner element (140) is connected to the section (121) by a materially interlocking connecting layer (160), and
j. the inner element (140) consists of a steel and of a material having a mechanical strength at least as high as that of the portion (121).

2. Column (100) according to claim 1,
**characterized in that**
the inner element (140) consists of a steel with a hardened surface.

3. Column (100) according to claim 1 or 2,
**characterized in that**
the outer element (130) consists of a self-lubricating plastic, preferably of polyoxymethylene.

4. Column (100) according to one of claims 1 to 3,
**characterized in that**
a transition area (143) from the projections (142) of the inner element (140) to the inner base body (141) of the inner element (140) and / or an end (144) of the projections (142) facing away from the inner base body (141) is rounded.

5. Method (200) for producing a length-adjustable column (100) according to one of claims 1 to 5, comprising the following steps:
a. Providing (210) a length adjustment device (120) with a section (121) and an inner element (140) of an anti-rotation device (160) with an inner base body (141), wherein an outer diameter of the section (121) is less than or equal to an inner diameter of the inner base body (141);
b. arranging (230) the section (121) in the inner base body (141) and
c. materially interlocking (240) the inner base body (141) with the section (121).

6. Method (200) according to claim 5,
**characterized by**
applying (220) an adhesive, preferably a metal adhesive, to an outer surface of the section (121) and / or an inner surface of the inner base body (141).

7. Method (200) according to claim 6,
**characterized in that**
the application (220) of the adhesive is carried out on the entire outer surface of the section (121) and / or in an amount sufficient to fill an intermediate space that is formed between the section (121) and the inner base body (141) when it is arranged (230) therein.

8. Method (200) according to one of claims 5 to 7,
**characterized in that**
the provision (210) of the length adjustment device (120) comprises cold drawing of the section (121) and / or the inner base body (141) and / or hardening of a surface of the section (121) and / or the inner base body (141).

9. Piece of furniture, in particular chair or table, comprising a column (100) according to one of claims 1 to 4.

## Revendications

1. Colonne réglable (100) comprenant
a. un tube montant (110) avec un axe longitudinal (LA) et
b. un dispositif de réglage de longueur (120) qui est disposé dans le tube montant (110) comprenant une section (121) qui est montée de manière à être déplaçable par rapport au tube montant (110) le long de l'axe longitudinal (LA) et
c. un dispositif anti-rotation pour bloquer la section (121) contre la rotation autour de l'axe longitudinal (LA) par rapport au tube montant (110),
d. le dispositif anti-rotation comprenant un élément interne (140) qui est fixé à une surface externe de la section (121), et un élément externe (130) qui est fixé à une surface interne du tube montant (110),
e. l'élément interne (140) coopérant positivement avec l'élément externe (130) par rapport à une rotation autour de l'axe longitudinal (LA) et étant guidé de manière déplaçable par l'élément externe (130) le long de l'axe longitudinal (LA),
f. l'élément interne (140) et l'élément externe (130) ayant une forme complémentaire l'un à l'autre,
g. l'élément externe (130) comprenant un corps de base externe (131) cylindrique avec un certain nombre de rainures (132) dans une surface intérieure (132) du corps de base externe (131) et
h. l'élément interne (140) comprenant un corps de base interne (141) cylindrique avec un certain nombre de saillies (142) sur une surface extérieure du corps de base interne (141) s'engageant dans les rainures (132),
**caractérisé en ce que**
i. l'élément interne (140) est relié à la section (121) par une couche de liaison intégrale (160), et
j. l'élément interne (140) est constitué d'un acier et d'un matériau ayant une résistance mécanique au moins égale à celle de la partie (121).

2. Colonne (100) selon la revendication 1,
**caractérisé en ce que**
l'élément interne (140) est constitué d'un acier avec une surface durcie.

3. Colonne (100) selon la revendication 1 ou 2,
**caractérisé en ce que**
l'élément externe (130) est constitué d'une matière plastique autolubrifiante, de préférence en polyoxyméthylène.

4. Colonne (100) selon l'une des revendications 1 à 3,
**caractérisé en ce que**
une zone de transition (143) entre les saillies (142) de l'élément interne (140) et le corps de base interne (141) de l'élément interne (140) et / ou une extrémité (144) des saillies (142) opposée au corps de base interne (141) est arrondie.

5. Procédé (200) de fabrication d'une colonne réglable en longueur (100)
selon l'une des revendications 1 à 4, comprenant les étapes suivantes :
a. Fournir (210) un dispositif de réglage de longueur (120) avec une section (121) et un élément interne (140) d'un dispositif anti-rotation (160) avec un corps de base interne (141), un diamètre extérieur de la section (121) étant inférieur ou égal à un diamètre interne du corps de base interne (141) ;
b. disposer (230) la section (121) dans le corps de base interne (141) et
c. lier (240) intégralement le corps de base interne (141) avec la section (121).

6. Procédé (200) selon la revendication 5,
**caractérisé par**
l'application (220) d'un adhésif, de préférence d'un adhésif pour métaux, sur une surface externe de la section (121) et / ou une surface interne du corps de base interne (141).

7. Procédé (200) selon la revendication 6,
**caractérisé en ce que**
l'application (220) de l'adhésif est effectuée sur toute la surface extérieure de la section (121) et / ou en une quantité suffisante pour remplir un espace intermédiaire qui est formé entre la section (121) et le corps de base interne (141) lorsqu'elle est disposée (230) là-dedans.

8. Procédé (200) selon l'une des revendications 5 à 7,
**caractérisé en ce que**
la fourniture (210) du dispositif de réglage de longueur (120) comprend l'étirage à froid de la section (121) et / ou du corps de base interne (141) et / ou le durcissement d'une surface de la section (121) et / ou du corps de base interne (141).

9. Élément de meuble, en particulier chaise ou table, comprenant une colonne (100) selon l'une des revendications 1 à 4.
